# EUROPEAN PATENT SPECIFICATION

(11) **EP 4 623 401 B1**
(45) Date of publication and mention of the grant of the patent: **07.10.2026**
(21) Application number: 23809337.1
(22) Date of filing: 16.11.2023
(51) Int. Cl.: G06Q 30/0601, G06Q 30/0283, G06N 20/00, H04L 9/32, G06N 3/08, H04L 9/00

(54) **SYSTEM FOR PHYSICAL AND DIGITAL ART AND METHOD FOR EVALUATING AND AUTHENTICATING A WORK OF ART**
SYSTEM FÜR PHYSISCHE UND DIGITALE KUNST UND VERFAHREN ZUR BEURTEILUNG UND AUTHENTIFIZIERUNG EINER KUNSTARBEIT
SYSTÈME D'ART PHYSIQUE ET NUMÉRIQUE ET PROCÉDÉ D'ÉVALUATION ET D'AUTHENTIFICATION D'UNE OEUVRE D'ART

(30) Priority: 24.11.2022 IT 202200024168
(43) Date of publication of application: 01.10.2025
(73) Proprietor: Artup S.r.l., 00158 Roma (RM) (IT)
(72) Inventor: CAPOGROSSI, Giorgio, 00158 Roma (RM) (IT)
(74) Representative: Fiammenghi, Eva
(86) International application number: PCT/IB2023/061607
(87) International publication number: WO 2024/110822

(56) References cited:
- US-A1- 2022 239 495

## Description

### Field of the art

The invention refers to the field of art and digital transition of the art market in web 3.0 by means of technologies such as for example blockchain. Still more specifically, the invention is adapted to provide a system that radically innovates the process of production and use of the value chain in the art market for physical and digital art and an evaluation and authentication method for an artist and his/her works of art.

### Prior art

The world visual art market has today reached a value of about 65 billion dollars per year and can be divided into three sub-segments: antique art, modern art and contemporary art. The value chain of contemporary art è constituted by three operator segments: the producers, the promoters and the buyers; for that which regards the value chain of antique and modern art, it is rather the art historians who generate value, reconstructing the history that determines the notoriety and the importance and therefore the price of an object of art. The producers of visual art works are really artists, those who make use of various techniques in order to produce the works of art, manually working the material or having reproductions made, also industrial and serial, starting from their own design or model; more recently, the use of computers enabled creating a value by encoding information in binary code. The work of art is a fine art work and the market appreciates it substantially for the form impressed on the material and in the signature of the artist who made it. Artistic products are unique objects, physically existing works of art and extremely rare. Also the industrial reproduction of a work of art is admissible up to a maximum of 7 signed exemplars for each type (design/model); instead, if an edition exceeds the 7 exemplars, even if these bear an artist signature, this is no longer a work of art but rather an industrial product. All of these visual art forms are "rights to the carrier" in the sense that there are no archives or personal databases of the unique goods and the owner is the one who physically possesses such goods. Indeed the preferred sale and purchase channels for the visual art market - whether antique, modern or contemporary - have always been physical channels such as fairs, art galleries and above all auction houses, due to the intrinsic nature of the products and of the sellable services of the field; these are nevertheless sale channels that are much more costly than the new digital channels. In addition, at the state of the art, it is practically impossible to protect the copyright on the sales subsequent to the first, or on the use of private images, due to the impossibility to trace such an opaque market. On the producer side, there is an production oligopoly of several hundred first-rank artists who hold practically the entire market and exert an enormous contractual power over all the segments. A particularly curious and widespread phenomenon today is that the average consumer prefers purchasing an edition signed by a first-rank artist, even if it is an edition of a thousand exemplars (and we are no longer even speaking of the art market, even though it is considered as such), rather than an original work of art of a producer of second or third rank. These circumstances exclude 99% of the producers of second or third rank from the presently-known market. Over time, also the art historians and intermediaries have polarized the contractual power, excluding the segments of the lower ranks of the value chain, since they are the ones who determine the price of a work of art with a subjective, exclusive and usually opaque process (in the sense that they never declare the method with which a specific number is obtained), in practice arbitrarily deciding to whom expertise and consultancy should be given and acting as intermediaries for the sale and purchase. These professional services must in some way serve to guarantee the buyer that he/she is purchasing a unique and original good and, in the best of cases, to protect both parties in the sale and purchase. It is interesting to note that there are no artistic price lists, no category associations that protect the work of the artists; indeed there is not even the category of "artists" who thus remain systematically excluded also from receiving state aid and subsidies (in Italy as in most other countries throughout the world, except for a few rare exceptions). This is way the market is substantially paralyzed, in the sense that the subjective processes are extremely slow, costly and also not very democratic, and those who profit from it naturally have no interest in the radical transformation of the production processes indicated by "digital transition". The value of work, especially on the primary market, is documented by the expertise and attested by the sale achieved on the market. Up until there remained an intermediary, the sale and purchase was documentable also in the private market, but the reports of 2020 and 2021 stated that the ratio between galleries that opened and galleries that closed was 1:7, with increasing impossibility to physically access the art market, especially for the second and third rank artists. The works themselves that are bought and sold are not traceable and thus clearly the market between private individuals and most of the market of second and third rank tend to not be considered in the estimates of the global market value. Indeed, the artists who are not represented in the galleries are not even taken under consideration. There are several modern digital intermediaries, which are computer portals accessible from the web and which offer a partial mapping and hierarchical classification service of world producers, with an access to the public that is only partially free. This method was innovative in 2000, with the advent of the Internet, nevertheless the hierarchical classification of the producers is an indisputable error to be overcome in order to enter web 3.0, since it places the artists in competition with each other based on an exclusive and elitist market model that rather than including producers, decentralizes the production and distributes the value of the works. In addition, a classification of the artists does not yield information on the actual value of the production, since the hierarchy of the classification is only based on the data of the transactions relative to the first-rank market, or to that relative to the secondary market of second rank (since the primary market of the second rank rarely records important transactions that affect the classifications, and hence they tend to be excluded due to lack of possibility to view them; same with those of the third rank). Some sites also classify several art exhibitions, only those in the best places and recognized by the system itself, so that it is clear that there is an selective oligopoly that keeps the market entrance barriers high, and which does not correct any of the actual problems of the reference market. Indeed, such circumstances expose the art market to a series of very serious problems, such as negative selection, moral hazard, production oligopoly, high entrance barriers and the exclusion of millions of people from the market itself, or even recycling of money through art. Another specific and non-irrelevant problem is the rarefaction of the insurers of art exhibitions for the second and third rank, which is inversely proportional to the increase of the operators active overall in the field: ensuring the works of art shows for second and third rank artists has very high preliminary costs which often paradoxically exceed the actual value of the works exhibited, rendering insurance coverage inconvenient and the service useless.

For some time, there has also been talk of two new visual art forms: digital art and more recently crypto-art. Digital art is a digital product available through a hardware device such as the screen of a computer or a smartphone, which are often power supplied by electric current, without requiring an internet connection. The circulation is always relevant in the above-described manner, and the signature is usually applied on the hardware device that contains the file. So-called "crypto-art" instead exists in web 3.0. and is substantially the ownership of a specific digital file ensured by technology DLS (blockchain); the underlying physics is electrical energy and in theory there is no need for a personal hardware in order to possess it, even if the hardware remains necessary in order to be able to see it. The word "crypto-art" refers to the encrypted digital file of the work of art which, due to the technology D.L.S. (Distributed Ledger Server or blockchain), can be archived in a master digital book shared over all the nodes of the network and which practically cannot be changed and ensures the holder of the right to be able to commercially use full control, both of the ownership and of the transactions relative thereto. As long as the above innovation remains purely technological, without any innovative addition to the use process of the art market, which remains as before: exclusive, elitist, opaque. The recent horrendous attempts to "compensate for" the decline of the physical and centralized channels of the art market at the global level can be reduced to a speculative bubble, also termed "the N.F.T.- Dygital fashion" i.e. digital objects with exponentially increased value. In reality however 99% of the artists who have tried to tokenize their own digital art work in N.F.T. format have not even obtained the production costs from the sale. Only an elect few, however unknown to the art world, have obtained incredible surplus values, also due to the intermediation of the great players of the art market such as for example the Christies auction house and the "beeple" case, which easily lead to speculation on objects which have practically nothing to do with visual art. Hence, the technological innovation and the web 3.0, at least for the moment, have only partially innovated the technique in the production processes, leaving the value chain of the market unaltered, without therefore making any radical transformation to the art market, which remains as faulty as before, actually paradoxically even more than before.

There are many examples of patents that are involved with providing innovations linked to art, to its certification through blockchain and to the processed tied thereto.

One example is the object of the patent application WO2022174410A1 by H. WANG. The invention claims a transaction system for works of art certificated through blockchain and an archiving medium. The system comprises: an information acquisition module used for acquiring information on the transactions of works of art, and a processing module for the transactions used for inserting the information of the transactions on a blockchain. Therefore, based on the transaction of the original art work, the information on the transaction is disclosed by applying blockchain technology, such that the users of the market can register and share the ownership of the management of the work, the information on the transaction and the information on the product payments.

Another example is the object of the patent application WO2020238002A1 by Z. HE. The invention refers to a system of identity of art works based on blockchain, comprising a data acquisition unit used by a device for managing the information in order to obtain an entire image of a work of art and a detailed microscopic image of the same; a deposit unit used by the device for managing the information to store the anti-counterfeiting material for the work of art; a processor, used by the information management device in order to register an account and to store the base information, the information on the image and the anti-counterfeiting information of the work of art; a display terminal used for displaying the information archived in a cloud server; and a reading terminal used by the information management device in order to obtain information stored in a chip.

Another example is the object of the patent application KR20200104590A by W.J. LEE. The invention refers to a system for the transaction of contents of digital art works based on a blockchain in order to construct a transaction environment that is clear and safe. The system comprises: a terminal which records detailed information on a creator and a client and detailed information on the contents of the digital art work, providing a web service relative to the payment for the transaction and providing the digital art work usable through browser or download. The invention also comprises a server for managing the information on the members which stores and manages the detailed information and transmits and provides the detailed information when the web terminal requests the detailed information; a smart contract block connected to the blockchain network and the management of a copyright and of the transaction details for the contents of the digital art work in order to execute a transaction; and a transaction server for the contents connected to the blockchain network, which distributes the block of the smart contract to the blockchain network and transfers a transaction. Consequently, the system executes a transaction of the content of the digital art work through a smart contract block based on a blockchain network.

Another example is the object of the patent application US2022239495A1 by R. NORTON et al. The application describes a method and a system for certification and authentication of objects is disclosed herein. The method and system use multiple attestations along with digital ledger technology to provide a digital certificate of authenticity for an object such as a work of art, collectible, or a non-fungible token (NFT).

The above-reported inventions, by way of an exemplifying and non-exhaustive example, are representative of the inventive-technological picture that is available today..

The object of the present invention is that of providing a physical-digital hybrid, which not only is involved with ensuring a certification through blockchain technology of works of art, but that it provides a unique method for the evaluation of the economic value of the works usable by art galleries, by private individuals and even companies such as for example insurance companies and transportation companies. The system ensures the certification of the digital identity of the producer, of the authenticity, of the anti-counterfeiting, ensures the certification of the value of the production, of the passages in the chain of the production process and the geolocation and of the transaction of the work. The invention resolves the technical problem linked to the quotation of the works of art that up to present sees the work at the center of the quotation; this type of approach, for authors who are not very well known or are entirely unknown, is problematic since it is impossible to attribute an objective value, not knowing the art coefficient.

The radical process innovation of the system of the present invention lies in the fact that the Non Fungible Token (N.F.T.) represents a work of art. The certificate of authenticity of a work emitted by the system of the invention is the certification of the authenticity of the work together with the representation of the economic and artistic display value linked to the signature of the author, whose the work follows. The present invention allows providing this type of artistic evaluation being based on a criterion which is instead linked to each artist who adheres in an interactive manner to the system and which obtains his/her own art coefficient determined through a scientific method and with an infallible algorithm. The evaluation of the works is thus conducted in an objective, verifiable and reproducible manner. The invention also provides multiple Web platforms and hardware devices which allow documenting the process of production and associating all the documents with the certificate of authenticity and ownership of the work. The invention then allows digitally signing the certificate with a pseudonym sovereign digital identity that has the power of signature, both legal and artistic, attributing value and authenticity to the work on which it is affixed or to the work with which the association tag-NFT is certified.

### Description of the invention

According to the present invention, a physical-digital hybrid system is attained for physical and digital art which employs an innovative method for associating the legal identity of a user and of his/her artistic alterego.

The radical transformation of the art use processes, especially contemporary art, is a natural consequence of the industrial revolution, substantially determined by the application of the very new technologies of web 3.0. first of all DLS (blockchain), artificial intelligence, the internet of things (IoT), virtual reality and augmented reality. The implementation of these technologies on a global scale determines an inevitable digitization of the processes of production and use, but not necessarily the decentralization of the production system. Nevertheless, in the present invention, the new technologies are implemented in order to find innovative solutions useful for correcting the most widespread problems of the traditional art market, such as the production oligopoly, the information asymmetries, the moral hazard, the subjective processes, the opacity of the market, the high entrance barriers, the concentration of the wealth, the physical barriers. The objectives of the present invention are those of radically innovating the process of use of contemporary art by progressively transforming the art market into a transparent marketplace that is inclusive, global and participatory, which equally and immediately distributes the generated wealth, for example by paying the copyright fee on sales subsequent to the first; by use it is intended an interpretive-formative, cognitive-morphogenetic process; this is the key of the "participation" (the spectator participates, becoming a "user", active subject of the production in the value chain of contemporary art). The system identifies the user and gives him/her a legal signature (which has a legal function and a legal value like that of a SPID); then, if the user is the author, it also associates him with a "pen name" pseudonym and assigns a holographic signature of "artistic signature" type thereto.

If the "Producer" user is not the author of the work, he/she will necessary be an heir of the author or will have the right of commercial use of the work. The system continues by attributing an economic value to the artist signature and associating it with the work of art through Non-Fungible Token (NFT) certificate.

The artist user (or for he who has the right) is thus enabled to attribute an authorship to a work already created (whether physical or digital). The legal signature serves for signing the NFT, i.e. the certificate of authenticity of a work of art; the art signature serves for attributing a prudential value of sale to the work of art, above all of the primary market. (Since up to now, is not possible to evaluate which is the value of a work of art introduced on the market that has not yet been subjected to a transaction, if not with a subjective process).

The present invention then attains a system for evaluating a work of art, whether physical or digital, starting from the strong identification of the value producers of the chain.

Such evaluation can be defined "dynamic" since it consists of a hybrid of a procedural algorithm and processing in real time executed by artificial intelligence.

The invention uses an procedural evaluation algorithm that is innovative and transparent, which generates an unpublished key-value databank, generated by an engineered mathematical formula, an innovative process which due to the scientific method is technically infallible. The procedural evaluation algorithm determines an art coefficient (whose only theoretical-philosophical definition dates to Marcel Duchamp, 1957) considering five essential characteristics of an artist such as identity, notoriety, virality, reputation and performance, assigning to each the relative weight and executing the non-compensatory summary thereof, determining a first absolute value in output (output), termed "absolute art coefficient"; the system is integrated with a neural network of artificial intelligence which processes the absolute value in output in a dynamic manner, through a vast series of algorithms, which give rise to the step of machine Learning and deep Learning, in which the absolute values of the first output are crossed with the internal databank and with the data saved in blockchain (for example the transactions of the works on the secondary market); here the absolute value is placed in relation with the other data of the databank, returning in output the relative rate of percentage application of the absolute value, which expressly oscillates between 0-200, and is termed "Art Index"; the mathematical relation (multiplication) between "Absolute Art Coefficient" and the "Art Index" generates the value output termed "Art Coefficient", which corresponds to the value attributable to the signature of a specific artist at a specific moment. The artificial intelligence cyclically executes (e.g. each 12 hours) all the calculations of the single "Art Coefficient", updating them in a dynamic manner, and due to the smart contract integrated on the blockchain, the system publishes the periodic bulletin with the new "Art Coefficient" updated results on the blockchain. Once the art coefficient of an artist signature has been evaluated, a mathematical formula is applied for the evaluation of the economic value of a work of art, which provides for multiplying the art coefficient (Art Coefficient) for the sum of the 3 spatial dimensions of the work itself, and then multiplying by multiples of 10, depending on the reference currency in which the artist author of the work operates. In the case of digital works, the system considers the virtual spatial dimension, i.e. the weight/resolution, and hence the physical size considered is the computing energy necessary for processing the file. This is useful above all for most of the producers who cannot sell via art institution channels. For example, a student who has completed studies at a Fine Arts Academy in Marocco, for the global art market is practically nonexistent and will conventionally have a value equal to zero; with this invention, however, he/she will certainly have a non-zero art coefficient, and therefore his/her production will have a price that is scientifically determined and greater than zero on the primary market. The evaluation of the art coefficient ensures that this can be placed in various categories. The number of categories and the range of art coefficient values that each of these encloses can be personalized.

The determination of the art coefficient is finally ensured and processed by the artificial intelligence which uses the procedural algorithms in order to generate dynamic values in machine learning and deep learning. The art coefficient is constantly reprocessed by the artificial intelligence based on the events and occurrences of the secondary market, which are reflected on a temporary oscillation of the art coefficient linked to the signature of the artist of the primary market.

The A.I. updates the data periodically, comparing the events that occur on the market, both primary and secondary, and returning an increasing or decreasing trend of the art coefficient, linked to the value of the artist signature, as well as an increase or decrease estimate of the prudential price of a work on the secondary market. In the above-indicated dimensions, those of "performance", "reputation" and "virality" account for occurrences outside the actions of a producer and return increasing or decreasing oscillations on the value of the production, which however broadly speaking do not cancel the primary value of the work of an artist.

The theoretical core of the innovation represented is the measurability of the notoriety associated with an art signature, and hence directly to the sovereign pseudonym digital identity of an artist, with which the value of his/her work is then indirectly attributed.

The innovation of the system consists of certifying the art signatures and associating them with the physical persons i.e. the artists who affix the signature in an infallible and certified manner. The system ensures that the signers perceive the copyright on the work also for sales subsequent to the first, automatically and immediately; it offers a prudential economic evaluation and reacts in real time to all the oscillations of the market linked to the works signed by the author; it also monitors the works, their geographic placement, the new owners exactly reconstructing all the ownership passages, thus contributing to the non-falsifiability of the work itself.

In one embodiment of the present invention, the artificial intelligence uses an algorithm in order to carry out web scraping so as to find information linked to the artist and/or to verify or falsify that which is manually introduced by the artist. The artists are in fact requested to compile an engineered questionnaire in which the size of the notoriety is measured, by calculating the quantity and quality of exhibitions, quantity and quality of publications, quantity and quality of prizes and type of education, requesting information directly from the user whether this is the direct artist, an art gallery, an art critic, a collector and/or still others. The quality of the publications and of the prizes is inferred in an automatic and scientific manner based on a hierarchy of weights attributed to the exhibitions, magazines, art galleries and competitions previously stated by the inventor. The invention then provides for an operation that starts with the artist who creates his/her work and decides to entrust it to the system for the certification of authenticity and of value linked to his actions; he can also document the creative process with greater guarantee of authenticity and storytelling

The process of production of the Non-Fungible Token (NFT) (certificate of authenticity and ownership relative to the work of art) occurs in this manner:
the user artist (with pseudonym sovereign digital identity and hence power of legal and artistic signature) decides to token one work of art thereof, affixing his/her legal signature on the digital certificate of authenticity and ownership of the work generated on the digital platform of the system due to the suitable smart contracts; this process ensures the authenticity of the work since it is the physical person identified who ensures the authorship of his art work, and determines the prudential sale value thereof on the primary market due to its art signature.

From here on, the work of art (physical or digital) will always be accompanied by a digital certificate of authenticity/ownership signed by the Producer.

Having an "art signature" certified by the system allows:
- also signing digital works;
- attributing a prudential value to the works both physical and digital;
- perceiving the copyright immediately for each sale subsequent to the first.

The invention then employs a strong Web software component, but also hardware components that by synergistically interacting with the first, facilitate the transactions and immediately allow the use of a work in both physical and digital mode.

The web part of the present invention provides for at least a web portal and/or an application that allows the display, the sale, the purchase, the certification through blockchain technology and the economic evaluation of said work of art. The web part comprises a series of decentralized applications (dApps) interconnected with each other due to a single document database and an artificial intelligence for processing all the data. The web portal and/or the application are divided into various sections like the author section and the promoter section which facilitate artists, and art promoter in the digitization of the works, in the certification thereof through tokens in a blockchain, and in the sale and purchase. A public section allows various users to view the works of the artists exhibited directly by them or on their behalf by art galleries or auction houses, to be able to buy them or make bids for the same, to be able to see the figurative representation thereof, or once again allows being able to invest on the art market or even to be a patron by promoting specific artists or art galleries. The public section in fact provides indications and periodic reports, with time marking, relative to the market trend. The public section, due to an artificial intelligence, is also able to carry out forecasts relative to the trend of the art market based on statistical estimates relative to the latest data, and to the periodic data accumulated over time and saved in a document database. The database is also adapted to preserve the portal user data, the blockchain data, and to keep track of the data of the sale and purchase transactions carried out with the cryptocurrency of the portal. The portal cryptocurrency has a value that is directly connected with the value of sale obtained by the artist on the market. The database still allows associating the legal identity of a producer with a pen name or pseudonym, so as to allow him to sign contracts, sign works of art and execute transactions, using his/her name or his/her art pseudonym alternately and in any case maintaining a legal value.

If the artist corresponds with the producer, then the artist associates the signature with his/her own pen name, he/she can sign contracts, transactions and also certify the originality or a work and even sign new works of art. If the artist instead does not correspond with the producer, this signifies that the NFT producer is not the author of the work, but has the right to commercially exploit the same, and also holds the right to the copyright. In this case, the producer, who previously demonstrated that he/she is the owner of the work of art and of the rights connected thereto, can emit the NFT linked to the work of art, sign contracts, transactions; in some cases, he/she can also certify the origin and the originality of the work of art, by loading probatory documents of the claimed rights, but he/she cannot create new works of art on behalf of the author with whom the art signature is associated.

The digitization of the works of art occurs by generating a token (NFT) associated with a tag physically applied to the work of art, which can be RFID, NFC, Beacon, Bluetooth and/or other similar technology. The invention provides that a producer kit can be provided to the artists, this contains one or more tags, a cold wallet and an anti-counterfeiting device.

In one embodiment of the present invention the producer kit is connected to a decentralized application (dApp) for smartphones, tablets, portable devices and other devices, which has a graphical interface that guides the user producer in the remote tokenization procedure of a physical work of art, by using the technologies of the device on which it is installed for geolocation, video camera, speakers.

The tag is applied on the work of art to be tokenized, the configuration with the system software takes place and at this point the anti-counterfeiting device is used in order to render the work of art and its tag unique and non-reproducible. In one embodiment of the present invention the anti-counterfeiting device is capable of spraying disposable colored ink on the tag. The sprayed ink is then scanned by using a video camera which, by filming the random distribution of the ink droplets, certifies the uniqueness thereof.

The printing of the tag occurs in a center enabled for issuing tags, i.e. enabled structures such as galleries, museums, etc. These centers enabled for issuing all have a hardware terminal for printing, reading and writing of NFC tags, of RFID transponders capable of storing information and interacting with NFC devices.

In one embodiment of the present invention, moreover, the tags cannot be removed without being irrevocably damaged and therefore certify possible falsification attempts.

When a producer wishes to tokenize a work of art, he/she physically delivers the work to one of the centers close by; in the center, the procedure of printing, programming and application of the tag associated with the NFT of the work will be executed. Then, the work will be returned to the sender or kept in display/storage/sale account, while the NFT certificate associated with the tag applied on the work will appear in the cold wallet of the producer, as phygital asset.

In one embodiment of the present invention, the tags can be provided to the producer with the signature already printed on the same. These are nevertheless still to be programmed with the guided procedure through software that is executed during the application of the tag and the association with the relative NFT.

In this manner, not only is the direct association tag-token ensured, but also an unconfutable proof of authenticity is ensured due to the physical and digital association of signature-tag-token that is registered in the database and is always usable through the blockchain. The token is also registered with smart contract technology in the form of Non-Fungible Token (NFT). Once registered, the NFT can be provided with automatic or semiautomatic functions that can be personalized by the owner of the work and which can provide for the viewing of a photographic representation thereof free of charge, by paying a certain fee, or only by purchasing the work itself, or even the remote deposit of the work which is placed in custody, in deposit, loaned to suitable structures.

In one embodiment, the producer kit comprises a video camera with a communication unit. The communication unit ensures the connection to the author section of the artist in order to allow him/her to configure the video camera so as to set it in order to make videos, time lapses and/or photographs of the entire creation process of the work, of only one part of the process, or even of only the operation of signature and affixing of the tag on the same. This metadata relative to the work can therefore be included directly in the token of the work and then be saved on the blockchain public register.

The hardware part of the invention also comprises a manager kit which has a tag reader, a manager cold wallet and a printing device as well as a system of anti-counterfeiting marking. With this kit, the art galleries or generally the art resellers, can digitize the works through the tags and through the anti-counterfeiting marking.

In one embodiment, the manager kit comprises a video scanning device which, by exploiting the infrared laser technology, is capable of carrying out a 3D mapping and digitization of the physical environment of the art gallery or even of a module of virtual reality for the virtual representation of the exhibition space. This process is arranged for the scope of generating mirrored images between the physical environment and the digital environment, thus allowing the creation of an exhibition space on the web portal and/or on the application, which can be equipped in an identical manner or completely different from the physical space of the art gallery so as to provide identical experiences or complementary experiences between the physical and digital worlds.

In this light, the present invention, in one embodiment thereof, employs virtual reality visors adapted to allow the users who visit the web portal and/or the application to carry out a virtual visit to said art gallery. The visor is also adapted for the implementation of augmented reality algorithms, when engaged within the physical space of the art gallery, allowing, once the works of art are viewed, to automatically view the data of the token and the price, and allowing to be able to immediately purchase a work. In this embodiment, the invention is suited to give rise to digital museums in which a visitor with a visor for the virtual reality can digitally pay for an entrance ticket in order to see the works of art.

The invention, finally, to complete the continuous synergy between physical and digital, provides for the possibility to provide, to the person who purchased a phygital art work, a smart display case in which one or more phygital art works (i.e. tokenized with the system, each of which has its own NFT) is physically present; this allows the owner of the frame to have the works displayed at hole and simultaneously sell the rights of the single works contained at its interior, which will become digital property rights (digital assets). A token is also attributed with the frame, which is the certificate of authenticity of the composition of works of art. This represents an absolute novelty in the field of art, since the previously existing compositions of works are relational works, painting-mosaics collections signed by the collector users, which become an active part of the art value chain. The token associated with the smart display case is therefore a collection of copyrighted paintings placed in an unpublished report and its value is given by the mathematical relation of the curves of the value of each work contained therein.

The smart display case can then be arranged by the owner of the work in any one private setting and can be attained to size with various materials and shapes.

The smart display case included in the present invention therefore appears as a hybrid hardware/software object for the innovative use in "phygital" mode; this is composed of a frame, an antireflection glass and an integrated monitor which, in one embodiment, can be an applied flexible screen OLED or QLED, or even a touch-pad, for the digital use of the contents and the display of the digital data in graphical-visual form.

The advantages offered by the present invention are evident in light of the description set forth up to now and they will be even clearer due to the enclosed figures and to the relative detailed description.

### Description of the figures

The invention will be described hereinbelow in at least a preferred embodiment by way of a non-limiting example with the aid of the enclosed figures, in which:
- FIGURE 1 shows a general view of the system for physical and digital art 100;
- FIGURE 2 shows a view of the method 300 for evaluating and authenticating a work of art 10 of said system for physical and digital art 100.

### Detailed description of the invention

The present invention will now be illustrated as a merely exemplifying but non-limiting or non-binding example, with reference to the figures which illustrate several embodiments relative to the present inventive concept.

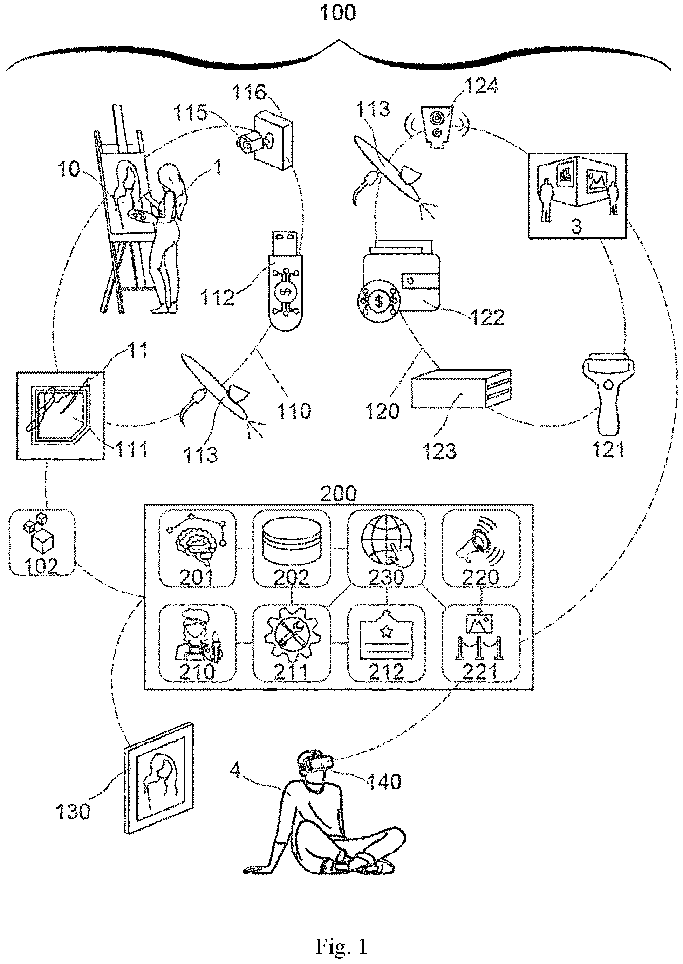

With reference to FIG. 1, a general view of said system for physical and digital art 100 is illustrated according to the present invention. In FIG. 1 as in the following description, the embodiment of the present invention is illustrated that is deemed to be the best at the present day.

Said system for physical and digital art 100, adapted to be employed by an artist 1 with a signature 11, an auction house 2, an art gallery 3 and/or a private individual 4 in order to exhibit, sell, purchase and certify through blockchain technology at least a phygital art work 10, comprises a producer kit 110 with a tag 111, a cold wallet 112, an anti-counterfeiting device 113 and a video camera 115 with a communication unit 116, a manager kit 120 with a tag reader 121, a manager cold wallet 122, a printing device 123, an anti-counterfeiting device 113 and a video scanning device 124, a smart display case 130, a virtual reality viewer 140, at least a web portal and/or application 200 with an artificial intelligence 201, a database 202, an author section 210 with an evaluation algorithm 211, an artist bulletin board 212, a promoter section 220 with an exhibition space 221 and a public section 230.

Said web portal and/or application 200 allows the display, the sale, the purchase and the certification through blockchain technology of said work of art 10 and its economic evaluation. Said producer kit 110 is adapted to allow said artist 1 to generate a digital token 102 for his/her own work of art 10 associated with said tag 111 RFID, NFC, Beacon, Bluetooth and/or other similar technology. Said cold wallet 112 is adapted to allow the archiving of a certain amount of a cryptocurrency 101, preserving the Non-Fungible Tokens NFT, as well as having other functions such as that of being connected to a virtual bank account. Said anti-counterfeiting device 113 is adapted to be employed in order to make non-reproducible said tag 111 of said work of art 10. Said anti-counterfeiting device 113 adapted to spray ink droplets on said tag 111 in a random and unique distribution. The ink droplets are then scanned through said video camera 115 which associates the random distribution with the token 102 NFT in order to generate a physical-digital link between said tag 111 and consequently said token 102 is saved in said database 202 attests the authenticity of said work of art 10. Said video camera 115 allows carrying out videos, time lapses, and/or photos of the entire creation process, of a part of the process, or of only the signature operation of said work of art 10 that can be included directly in the token 102 of the blockchain of the work, through said communication unit 116 which is also capable of being connected to said author section 210 for the configuration of the video camera 115.

FIG. 1 shows an embodiment in which for said art coefficient 103 (not shown in the figure), three ranges are determined corresponding to the same number of categories 104.

Said manager kit 120 is adapted to allow said auction house 2 and/or said art gallery 3 to map their exhibition space and be able to generate said token 102 for said work of art 10 and to be able to sell it. Said manager kit 120 uses said tag reader 121 with technology RFID, NFC, Beacon, Bluetooth and/or other, in order to read said tag 111. Said manager cold wallet 122 also allows archiving said cryptocurrency 101 and NFT. Said printing device 123 serves to print said tag 111 and said signature 11 on said tag 111; the anti-counterfeiting device 113 uses an anti-counterfeiting ink on the tags 111 of the works of art 10 in order to prevent them from being able to be altered or removed. Said video scanning device 124 is used for digitizing the physical environment of said art gallery 3 and/or of another exhibition space, and employs infrared laser technology for mapping the environment which is then automatically digitized and represented in said exhibition space 221 of said web portal and/or application 200.

Said smart display case 130 allows said private individual 4, who purchased said work of art 10, to position said work of art with its relative tag 111 in a private space.

Said web portal and/or application 200 comprises said artificial intelligence 201 which uses algorithms of machine learning and of deep learning in order to verify the information of said artist 1 inserted in the portal by said artist 1 himself/herself, by said auction house 2 and/or by said art gallery 3, by analyzing the data thereof registered in the blockchain regarding the quantity of works of art 10 produced, the time employed to produce them, automatically evaluated by operating the differences between the time marks of the data of the blockchain, the value of said works of art 10 and the veracity of other information introduced by employing web scraping techniques in order to verify the URLs, crossing the data inserted with that of the databank ISBN and with that of newspaper articles, blogs, external sites and others. Said database 202 preserves portal user data, a copy of the data saved in blockchain, and keeps track of the data of the sale and purchase transactions made with said cryptocurrency 101. Said author section 210 allows the registration of said artist 1 with the portal, the determination of an art coefficient 103 (not shown in the figure), associated with said artist 1, through an evaluation algorithm 211, and the display and sale of said work of art 10 in an artist bulletin board 212 through the connection with said producer kit 110.

Said promoter section 220 instead allows said auction house 2 and/or said art gallery 3 to register its own works of art 10 through said tags 111 and the relative tokens 102 in blockchain data, and the display of said works of art 10 in an exhibition space 221, as well as the sale and purchase of said works of art 10.

Said public section 230 finally allows said private user 4 to view said exhibition space 221, said artist bulletin board 212, in which he/she can receive customized suggestions of works of art 10 to be viewed by said artificial intelligence 201 which analyzes and studies the preferences of said private user 4, in which he/she can view the sales trends associated with a specific artist 1, or a specific auction house 2 and/or art gallery 3.

The generic user, whether an artist 1 or a private individual 4, can employ said virtual reality viewer 140 in order to access said exhibition space 221 and carry out a virtual visit of said art gallery 3 whose digital environment 3D was generating by using said video scanning device 124.

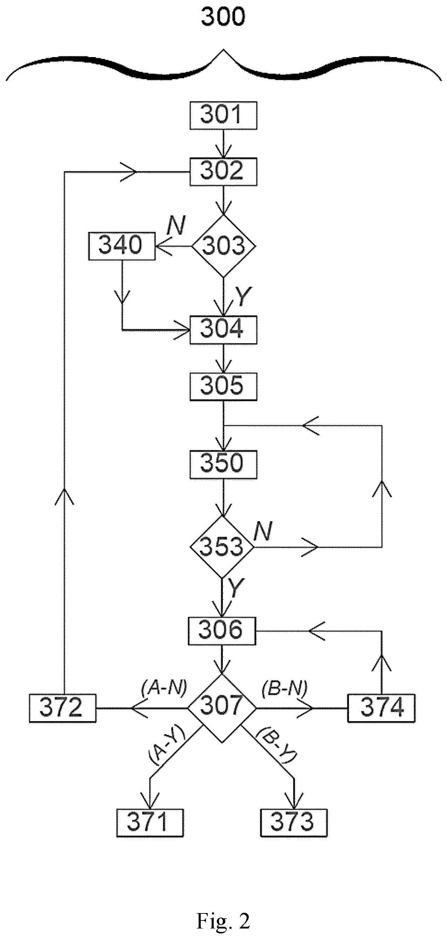

With references to FIG. 2 a view of said method 300 is shown for evaluating and authenticating a work of art 10 of said system for physical and digital art 100. Said method 300 will be described with respect to figures 1 and 2.

Said method 300 is adapted to use said system for physical and digital art 100 according to the steps described hereinbelow.

Step of size definition 301 in which said web portal and/or application 200 requests said artist 1, said auction house 2 or said art gallery 3 to insert the physical dimensions, the materials and the techniques for attaining said work of art 10. In the subsequent step of artist identity definition 302 said web portal and/or application 200 subjects said artist 1, said auction house 2 or said art gallery 3 to an applicant questionnaire regarding notoriety, exhibitions, quantity and quality of publications, quantity and quality of prizes and type of education of said artist 1, author of said work of art 10. In this step said artificial intelligence 201 determines the quality of publications and prizes based on a hierarchy of exhibitions, magazines, art galleries and competitions that were previously stipulated and are constantly updated.

In the step of relative size definition of the artist 303, said artificial intelligence 201, through algorithms such as for example those which use web scraping techniques, searches the personal and public pages of the artist 1, author of said work of art 10, by analyzing the quantity and quality of the impressions, of the interactions and of the sharing. Said step of relative size definition of the artist 303 evaluates the relative dimensions of virality, reputation and performance of the artist.

Such dimensions are evaluated not only through the self-declarations of the artist 1 or through that found by the algorithms such as that of web scraping, but these constitute new data generated entirely generated by said artificial intelligence 201 and by its interaction with the real world.

The virality specifically measures how many likes, how many impressions, how many followers and that hits the artist 1 receives for his/her digital content. Upon increasing the virality, also the notoriety linked thereto will increase by a mathematical relation, even if the difference is that the virality refers to the virtual world, not to the real life experiences lived by the artist.

The reputation verifies the information inserted by the artist with a complex series of data crosses, and also with web scraping algorithms and similar instruments, in order to determine the level of reliability of this user.

The performance instead measures the data relative to the artistic production, hence technique, time, production costs and also sales, the times in which the sales are carried out with respect to the production, the environmental impact and the like. In order to return a value that will then be mathematically related to the absolute value generated firstly by only the dimension determined by the procedural algorithm of the notoriety.

Said step of relative size definition of the artist 303 is adapted to have a positive outcome (Y) or negative outcome (N). When said artificial intelligence 201 is able to identify at last a social media page, a blog, or an URL linked to said artist 1, the outcome is positive (Y) and the method 300 proceeds with a step of definition of artist reputation 304. When instead the outcome of the search of said artificial intelligence 201 through the web scraping is null, the outcome is negative (N) and said web portal and/or application 200 requests, in a request step 340, the manual insertion of links to social media pages, blogs, websites and others of said artist 1. The method 300 then continues with a step of definition of artist reputation 304 in which said artificial intelligence 201, through web scraping techniques, searches for quantity and quality of the citations and infractions linked to said artist 1. Subsequently the method 300 provides for a step of determination of the prudential value 305 in which a prudential economic value is estimated for said work of art 10 dependent on the physical dimensions of said work of art 10 and by said art coefficient 103. Said art coefficient 103 is determined by said evaluation algorithm 211 based on the dimensions of the identity, notoriety, virality, performance and reputation of said artist 1, determined in the respective steps of artist identity definition 302, relative size definition of the artist 303 and definition of artist reputation 304. Said step of determination of the prudential value 305 is adapted to show the prudential value and said art coefficient 103 in said public section 230, said exhibition space 221 and said artist bulletin board 212.

In the subsequent printing step 350, said artificial intelligence 201 allows the printing of said signature 11 on said tag 111 of said work of art 10 and registers the data thereof on said database 202.

In the control step 353, said web portal and/or application 200 requires a photographic proof of the successful application of said tag 111 with said signature 11 through the camera of a smartphone, of a tablet, the webcam of a PC or through said video camera 115. Said artificial intelligence 210 is adapted, in said control step 353, to carry out an analysis of the photographic proof inserted by using photographic recognition algorithms. Also said control step 353 is adapted to have a positive outcome (Y) or negative outcome (N). When said artificial intelligence 210 recognizes said signature 11, the outcome is positive (Y) and the method 300 continues with a step of definition of the potential value 306, when instead the signature 11 is not recognized, due to the quality of the photograph, or actually due to differences, the outcome is negative (N), said artificial intelligence 201 sends a notification on said web portal and/or application 200 and the method 300 restarts from said printing step 350. In the step of definition of the potential value 306, said web portal and/or application 200 allows the manual definition of a potential value of said work of art 10 which may be greater, equal to or less than the prudential value evaluated in said step of determination of the prudential value 305.

In the following analysis step 307, said artificial intelligence 201 analyzes the trend of the sale of said work of art 10 in relation to the prudential value and to the potential value respectively evaluated in said steps of determination of the prudential value 305 and definition of the potential value 306. The analysis step 307 can have various outcomes, when in fact the prudential value coincides with the potential value and the work is sold (A-Y), the method 300 continues with a finalization step 371 in which said artificial intelligence 201 records the success of the prediction. When the prudential value coincides with the potential value but the work remains unsold (A-N), the method 300 continues with a waiting and reprocessing step 372 in which it awaits a pre-set and customizable period of time, before then restarting from said step of artist identity definition 302. When once again the prudential value is different from the potential value and the work is sold (B-Y), the method 300 continues with a re-calibration and finalization step 373 in which said artificial intelligence 201 records the success of the sale to the potential value, such registration will have a significant weight in the possible future steps of artist identity definition 302. When, finally, the prudential value is different from the potential value but the work remains unsold (B-N), the method 300 continues with a waiting and alerting step 374 in which it awaits a pre-set and customizable period of time, before then sending an alert adapted to remind said artist 1, said auction house 2 or said art gallery 3, owner of said work of art 10, that the potential value selected differs from the determined prudential value and it was detected to be ineffective, hence in this case the method 300 restarts from said potential value definition step 306.

Finally, it is clear that modifications, additions or variations that are obvious for a man skilled in the art can be made to the invention described up to now, without departing from the protective scope that is provided by the enclosed claims.

## Claims

1. System for physical and digital art (100), suitable for use by an artist (1) with a signature (11), an auction house (2), an art gallery (3) and/or a private individual (4) to exhibit, sell, buy and certify through blockchain technology at least a work of art (10) of the phygital type, and comprising:
- at least a web portal and/or application (200) suitable for allowing the display, sale, purchase and certification via blockchain technology of said work of art (10) and its economic evaluation; said web portal and/or application (200) capable of certifying a signature (11) affixed by said artist (1) on said work of art (10), associating said signature (11) in nominal or pseudonym form, to the natural person and legal rights of said artist (1) allowing him/her to sign contracts, sign works of art (10) and execute transactions using his/her name or his/her pseudonym alternatively; said web portal and/or application (200) capable of linking the economic evaluation of said work of art (10) solely to the signature (11) affixed by said artist (1);
- a producer kit (110) adapted to allow said artist (1) to generate a digital token (102) for his/her own work of art (10) associated with a RFID, NFC, Beacon or Bluetooth tag (111); said producer kit (110) comprising an anti-counterfeiting device (113) and at least a cold wallet (112) suitable for allowing the archiving of a certain amount of a cryptocurrency (101) and of said work of art (10) and of NFTs; said producer kit (110) comprising a video camera (115) with a communication unit (116) adapted to connect to said web portal and/or application (200) for configuring and making videos, time lapse, and/or photos of the entire process of creation, of a part of the process, or only of the signing operation of said work of art (10) which may be included directly in the token (102) of the blockchain of the work of art; said anti-counterfeiting device (113) adapted to generate a spray ink jet on the tag (111), the dried droplets of which are scanned with said video camera (115) and cannot be replicated by counterfeiters;
- a manager kit (120) adapted to allow said auction house (2) and/or said art gallery (3) to map their exhibition space and to be able to generate said token (102) for said work of art (10) and to be able to sell it; said manager kit (120) being suitable for exploiting a tag reader (121) using RFID, NFC, Beacon or Bluetooth, to read said tag (111), a manager cold wallet (122) suitable for allowing storage of a quantity of said cryptocurrency (101) for the purchase and sale transactions of said auction house (2) and/or said art gallery (3) and of NFTs, a printing device (123) suitable for printing on tags (111) a QR code associated with said signature (11), said signature (11) itself and/or other information such as logos and the like; said manager kit (120) comprising said anti-counterfeiting device (113) and said video camera (115);
- a smart display case (130) adapted to allow said private individual (4) who has purchased said work of art (10), to place said work of art with its relative tag (111) in a private space; said smart display case (130) being adapted to be made with antireflection glass; said smart display case (130) being adapted to allow reading of said tag (111) for displaying the related Non-Fungible Token (NFT) with which said token (102) has been registered and of the blockchain associated with it;
said web portal and/or application (200) comprising:
- an artificial intelligence (201) adapted to use machine learning and deep learning algorithms to verify the information of said artist (1) entered in the portal by the artist (1) himself, by said auction house (2), by said art gallery (3) by art historians, curator users and/or collector users, analyzing the data recorded in the blockchain regarding the quantity of works of art (10) produced, the time taken to produce them, the value of said works of art (10) and the veracity of other information entered by adopting algorithmic procedures such as web scraping to verify URLs, crossing the data entered with those of the ISBN database and with those of newspaper articles, blogs, external sites and others;
- an author section (210) adapted to allow the registration of said artist (1) to the portal, to allow the determination of the art coefficient (103), associated with said artist (1), through an evaluation algorithm (211), and to allow the display and sale of said work of art (10) in an artist bulletin board (212) through the connection with said producer kit (110);
- a database (202) adapted to store portal user data, blockchain data, and the associations made between said artist (1), said signature (11), said art coefficient (103) and said work of art (10), and to keep track of the data of the purchase and sale transactions carried out with said cryptocurrency (101);
- a promoter section (220) adapted to allow said auction house (2) and/or said art gallery (3) to register their own works of art (10) through said tags (111) and the relative tokens (102) in blockchain data, to allow the display of said works of art (10) in an exhibition space (221), and to allow the sale and purchase of said works of art (10);
- a public section (230) in which said private user (4) can view said exhibition space (221), said artist bulletin board (212), in which he/she can receive personalized suggestions of works of art (10) to be seen by said artificial intelligence (201) which analyzes and studies the preferences of said private user (4), in which he/she can view the sales trends associated with a specific artist (1), or with a specific auction house (2) and/or art gallery (3).

2. System for physical and digital art (100), according to the preceding claim 1, **characterized in that** said public section (230) allows said private individual (4) to purchase works of art (10) and to make investments by purchasing shares part of said auction house (2), of said art gallery (3), or directly of the system and market of phygital art works (10); said public section (230) being adapted to provide indications relating to the trend of the market for works of art (10) and forecasts made by said artificial intelligence (201).

3. System for physical and digital art (100), according to the preceding claim 1 or 2, **characterized in that** said producer kit (110) and said manager kit (120) allow to connect said token (102) to said tag (111) of said work of art (10); said token (102) being adapted to be registered with smart contract technology in the form of a Non-Fungible Token (NFT); said token (102) registered in the form of NFT usable within said web portal and/or application (200), is provided with semi-automatic functions that can be customized by the owner who may be said artist (1), said house of auctions (2) or said art gallery (3), and which can provide for the display of the photographic representation of said work of art (10) free of charge, by paying a certain fee, or only by purchasing the work of art (10) itself; said token (102) in the form of an NFT adapted to guarantee ownership of said work of art (10) with a digital certificate of ownership and/or authenticity regardless of the movement, display or custody of the physical representation of said work of art (10) itself.

4. System for physical and digital art (100), according to any one of the preceding claims, **characterized in that** said anti-counterfeiting device (113) is adapted to produce an anti-counterfeiting ink jet, supplied in disposable format, on said tag (111) to make said tag (111) unique by generating on it and on the signature (11) printed on it a random and irreproducible distribution of ink droplets and to generate a physical-digital link between said signature (11), said tag (111) and consequently said token (102) which is saved in said database (202) and which certifies the originality of said work of art (10).

5. System for physical and digital art (100), according to any one of the preceding claims, **characterized in that** said producer kit (110) comprises a video camera (115) with a communication unit (116) adapted to connect to said author section (210) for setting up and making videos, time lapses, and/or photos of the entire creation process, part of the process, or just the signing operation of said artwork (10) which may be included directly in the token (102) of the blockchain of the work of art.

6. System for physical and digital art (100), according to any one of the preceding claims, **characterized in that** said manager kit (120) comprises a video scanning device (124) for digitizing the physical environment of said art gallery (3) and/or another exhibition space; said video scanning device (124) adopting infrared laser technology for mapping the environment and digitizing it in said display space (221) of said web portal and/or application (200); the environment scanned with said video scanning device (124) is adapted to be set up in said promoter section (220) with the photographic representations of said works of art (10) and/or with the tokens (102) thereof.

7. System for physical and digital art (100), according to any one of the preceding claims, **characterized in that** said Web portal and/or application (200) takes advantage of decentralized Applications (dApps) capable of providing separate services for:
- geolocating said work of art (10);
- scanning said signature (11) and said artwork 8109 via a portable device such as a smartphone, tablet and the like;
- having an event calendar that updates and sends deadline notifications;
- having a map of the managers, museums, art studios, art galleries (3) that participate in the system making them physically visitable.

8. System for physical and digital art (100), according to any one of the preceding claims, **characterized in that** said exhibition space (221) of said web portal and/or application (200) can be visited by a user, whether said artist (1) and/or said private individual (4) using a virtual reality viewer (140) adapted to allow a virtual visit to said art gallery (3); said virtual reality viewer (140) being adapted to allow the use of augmented reality algorithms, when worn within the physical space of said art gallery (3), so that, once said works of art (1) are displayed, the data of the relative tokens (102) and the price are automatically shown, and allowing to be able to immediately purchase a work of art (1) by interacting with the virtual reality viewer (140) for example by touching input buttons on it, making particular movements with the head or other; said virtual reality viewer (140) and said web portal and/or application (200) being adapted to allow the creation of digital museums in which a visitor can pay an entrance ticket to see said works of art (3).

9. Method (300) for evaluating and authenticating said work of art (10) of said system for physical and digital art (100), according to any of the preceding claims, comprising using the system according to the following steps:
- size definition (301) wherein said web portal and/or application (200) requests said artist (1), said auction house (2) or said art gallery (3) to enter the physical dimensions of said work of art (10);
- artist identity definition (302) wherein said web portal and/or application (200) subjects said artist (1), said auction house (2) or said art gallery (3) to a questionnaire requesting information to measure notoriety, quantity and quality of publications, quantity and quality of prizes and type of training of said artist (1) author of said work of art (10); said artificial intelligence (201) capable of determining the quality of publications and awards on the basis of a hierarchy of exhibitions, magazines, art galleries and competitions stipulated in advance and constantly updated;
- definition of the relative dimensions of the artist (303) wherein said artificial intelligence (201), through algorithmic procedures such as web scraping techniques, searches the personal and public pages of the artist (1) author of said work of art (10) analyzing the quantity and quality of impressions, interactions and shares; said step of defining the relative dimensions of the artist (303) being capable of having a positive (Y) or negative (N) outcome; when said artificial intelligence (201) manages to identify at least a social media page, a blog, or a URL linked to said artist (1) the outcome is positive (Y) and the method (300) proceeds with a step of artist reputation definition (304); when the result of the search for said artificial intelligence (201) through web scraping is null, the outcome is negative (N) and said web portal and/or application (200) requests, in a request step (340), the manual insertion of links to social media pages, blogs, sites and others of said artist (1);
- definition of artist reputation (304) wherein said artificial intelligence (201), through web *scraping* techniques, searches for the quantity and quality of quotations, forgeries and infringements related to said artist (1);
- prudential value determination (305) wherein a prudential economic value is estimated for said work of art (10) dependent on the physical size of said work of art (10) and said work of art coefficient (103); said work of art coefficient (103) is determined by said evaluation algorithm (211) on the basis of the features of identity, notoriety, virality, performance and reputation of said artist (1), determined in the respective steps of artist identity definition (302), artist relative size definition (303) and artist reputation definition (304); said prudential value determination step (305) is adapted to display the prudential value and said work of art coefficient (103) in said public section (230), said exhibition space (221) and said artist bulletin board (212);
- printing step (350), wherein said artificial intelligence (201) prints said signature (11) on said tag (111) of said work of art (10) and records the data thereof on said database (202);
- control step (353) wherein said web portal and/or application (200) requests photographic proof of the successful printing of said tag (111) with said signature (11) via the camera of a smartphone, a tablet, the webcam of a PC or via said video camera (115); said artificial intelligence (210) is adapted, in said control step (353) to carry out an analysis of the inserted photographic evidence; said control step (353) is adapted to have a positive (Y) or negative (N) outcome; when said artificial intelligence (210) recognizes said signature (11) by exploiting photographic recognition algorithms, the outcome is positive (Y) and the method (300) continues with a step for defining the potential value (306); when said artificial intelligence (201) identifies a difference between said signature (11) present in the photographic proof, and the one printed in the previous steps and/or recorded in said database (202), the outcome is negative (N), said artificial intelligence (201) sends a notification on said web portal and/or application (200) and the method (300) restarts from said printing step (350);
- definition of potential value (306) wherein said web portal and/or application (200) allows for the manual definition of a potential value of said work of art (10) which may be greater, equal to or less than the prudential value assessed in said step of determining the prudential value (305);
- analysis step (307) wherein said artificial intelligence (201) analyzes the trend of the sale of said work of art (10) in relation to the prudential value and the potential value respectively evaluated in said steps of determination of the prudential value (305) and definition of potential value (306); said analysis step (307) being adapted to have various outcomes; when the prudential value coincides with the potential value and the work is sold (*A-Y*) the method (300) continues with a finalization step (371) wherein said artificial intelligence (201) records the success of the prediction; when the prudential value coincides with the potential value but the work remains unsold (*A-N*) the method (300) continues with a waiting and reprocessing step (372) wherein it waits for a pre-set and customizable period of time, to then restart from said artist identity definition step (302); when the prudential value is different from the potential value and the work is sold (*B-Y*) the method (300) continues with a re-calibration and finalization step (373) wherein said artificial intelligence (201) records the success of the sale potential value, this registration will have a significant weight in any future stages of definition of artist identity (302); when the prudential value is different from the potential value but the work remains unsold (*B-N*) the method (300) continues with a waiting and warning step (374) wherein it waits for a pre-set and customizable period of time, to then send an alert adapted to remind said artist (1), said auction house (2) or said art gallery (3) that is selling said work of art (10), that the selected potential value differs from the prudential value determined and proved ineffective; the method (300) therefore restarts from said step of definition of the potential value (306).

## Patentansprüche

1. System für physische und digitale Kunst (100), das zur Nutzung durch einen Künstler/ein Künstlerin (1) mit einer Signatur (11), ein Auktionshaus (2), eine Kunstgalerie (3) und/oder eine Privatperson (4) geeignet ist, um zumindest ein Kunstwerk (10) vom Typ "Phygital" mittels Blockchain-Technologie auszustellen, zu verkaufen, zu kaufen und zu zertifizieren, und das aufweist:
- zumindest ein Webportal und/oder eine Anwendung (200), das bzw. die dazu geeignet ist, die Ausstellung, den Verkauf, den Kauf und die Zertifizierung des Kunstwerks (10) mittels Blockchain-Technologie sowie dessen wirtschaftliche Bewertung zu ermöglichen;
- wobei das Webportal und/oder die Anwendung (200) in der Lage ist, eine durch den Künstler/die Künstlerin (1) auf dem Kunstwerk (10) angebrachte Signatur (11) zu zertifizieren, die Signatur (11) in Form eines Namens oder Pseudonyms der natürlichen Person und Rechtsansprüchen des Künstlers/der Künstlerin (1) zuzuordnen, was ihm/ihr ermöglicht, Verträge zu unterzeichnen, Kunstwerke (10) zu unterzeichnen und Transaktionen alternativ unter Verwendung seines/ihres Namens oder seines/ihres Pseudonyms durchzuführen; wobei das Webportal und/oder die Anwendung (200) in der Lage ist, die wirtschaftliche Bewertung des Kunstwerks (10) ausschließlich durch die durch den Künstler/die Künstlerin (1) angebrachte Signatur (11) zu verknüpfen;
- ein Produzenten-Kit (110), das dazu ausgelegt ist, es dem Künstler/der Künstlerin (1) zu ermöglichen, ein digitales Token (102) für sein/ihr eigenes Kunstwerk (10), der mit einem RFID-, NFC-, Beacon- oder Bluetooth-Tag (111) verknüpft ist, zu erzeugen;
wobei das Produzenten-Kit (110) eine Fälschungsschutz-Einrichtung (113) und zumindest eine Cold Wallet (112) aufweist, die dazu ausgelegt ist, das Archivieren eines bestimmten Betrags einer Kryptowährung (101) sowie des Kunstwerks (10) und von NFTs zu ermöglichen; wobei das Produzenten-Kit (110) eine Videokamera (115) mit einer Kommunikationseinheit (116) aufweist, die dazu ausgelegt ist, eine Verbindung mit dem Webportal
und/oder der Anwendung (200) zum Konfigurieren und Erstellen von Videos, Zeitrafferaufnahmen und/oder Fotos des gesamten Entstehungsprozesses, eines Teils des Prozesses oder lediglich des Signiervorgangs des Kunstwerks (10), die direkt in den Token (102) der Blockchain des Kunstwerks enthalten sein können; wobei die Fälschungsschutz-Einrichtung (113) dazu ausgelegt ist, einen Sprüh-Tintenstrahl auf das Tag (111) zu erzeugen, dessen getrocknete Tröpfchen mit der Videokamera (115) gescannt werden und von Fälschern nicht repliziert werden können;
- ein Manager-Kit (120), das dazu ausgelegt ist, dem Auktionshaus (2) und/oder der Kunstgalerie (3) zu ermöglichen, seinen/ihren Ausstellungsraum zu kartieren und das Token (102) für das Kunstwerk (10) erzeugen zu können und es verkaufen zu können; wobei das Manager-Kit (120) dazu geeignet ist, einen Tag-Leser (121), der RFID, NFC, Beacon oder Bluetooth verwendet, zu nutzen, um das Tag (111) zu lesen, eine Manager-Cold-Wallet (122), die dazu geeignet ist, die Speicherung eines Betrags der Kryptowährung (101) für die Kauf- und Verkaufstransaktionen des Auktionshauses (2) und/oder der Kunstgalerie (3) sowie von NFTs zu ermöglichen, sowie eine Druck-Einrichtung (123), die zum Drucken eines mit der Signatur (11) selbst und/oder anderen Informationen wie etwa Logos und dergleichen verknüpften QR-Codes auf Tags (111) geeignet ist; wobei das Manager-Kit (120) die Fälschungsschutz-Einrichtung (113) und die Videokamera (115) aufweist;
- einen intelligenten Schaukasten (130), das dazu ausgelegt ist, es der Privatperson (4), die das Kunstwerk (10) erworben hat, das Kunstwerk zusammen mit dem dazugehörigen Tag (111) in einem privaten Raum aufzustellen; wobei der intelligente Schaukasten (130) dazu ausgelegt ist, aus entspiegeltem Glas gefertigt zu werden; wobei der intelligente Schaukasten (130) dazu ausgelegt ist, das Lesen des Tags (111) zum Anzeigen des zugehörigen nicht-fungiblen Tokens (NFT), mit dem das Token (102) registriert wurde, sowie der damit verbundenen Blockchain zu ermöglichen;
wobei das Webportal und/oder die Anwendung (200) aufweist:
- eine künstliche Intelligenz (201), die dazu ausgelegt ist, Algorithmen des maschinellen Lernens und des Deep Learning zu nutzen, um die Informationen über den Künstler (1), die in dem Portal durch den Künstler/die Künstlerin (1) selbst, durch das Auktionshaus (2), durch die Kunstgalerie (3), durch Kunsthistoriker, Kuratoren und/oder Sammler eingetragen wurden, zu überprüfen, die in der Blockchain aufgezeichneten Daten hinsichtlich der Anzahl produzierter Kunstwerke (10), der um diese herzustellen benötigten Zeit, des Wertes der Kunstwerke (10) sowie der Richtigkeit weiterer eingetragener Informationen durch Anwenden algorithmischer Verfahren wie etwa Web-Scraping, um URLs zu überprüfen, sowie durch das Abgleichen der eingetragenen Daten mit denen der ISBN-Datenbank und mit denen aus Zeitungsartikeln, Blogs, externen Sites und anderen Quellen zu analysieren;
- einen Autorenbereich (210), der dazu ausgelegt ist, die Registrierung des Künstlers/der Künstlerin (1) auf dem Portal zu ermöglichen, die Bestimmung des mit dem Künstler/der Künstlerin (1) verbundenen Kunstkoeffizienten (103) durch einen Bewertungsalgorithmus (211) zu ermöglichen, sowie die Ausstellung und den Verkauf des Kunstwerks (10) in einem Künstlerforum (212) über die Verbindung mit dem Produzenten-Kit (110) zu ermöglichen;
- eine Datenbank (202), die dazu ausgelegt ist, Daten von Nutzern des Portals, Blockchain-Daten sowie die zwischen dem Künstler/der Künstlerin (1), der Signatur (11), dem Kunstkoeffizienten (103) und dem Kunstwerk (10) hergestellten Verknüpfungen zu speichern und die Daten der mit der Kryptowährung (101) durchgeführten Kauf- und Verkaufstransaktionen nachzuverfolgen;
- einen Promoter-Bereich (220), der dazu ausgelegt ist, es dem Auktionshaus (2) und/oder der Kunstgalerie (3) zu ermöglichen, seine/ihre eigenen Kunstwerke (10) über Tags (111) und die zugehörigen Token (102) in Blockchain-Daten zu registrieren, das Ausstellen der Kunstwerke (10) in einem Ausstellungsraum (221) zu ermöglichen, sowie den Kauf und Verkauf der Kunstwerke (10) zu ermöglichen;
- einen öffentlichen Bereich (230), in dem der private Nutzer/die private Nutzerin (4) den Ausstellungsraum (221), das Künstlerforum (212) einsehen kann, in dem er/sie personalisierte Vorschläge für Kunstwerke (10), die durch die künstliche Intelligenz (201), die die Vorlieben des privaten Nutzers/der privaten Nutzerin (4) analysiert und untersucht, betrachtet werden sollen, erhalten kann, in dem er/sie die Verkaufstrends, die mit einem bestimmten Künstler/einer bestimmten Künstlerin (1) oder mit einem bestimmten Auktionshaus (2) und/oder einer bestimmten Kunstgalerie (3) verbunden sind, einsehen kann.

2. System für physische und digitale Kunst (100) gemäß dem vorstehenden Anspruch 1, **dadurch gekennzeichnet, dass** der öffentliche Bereich (230) es der Privatperson (4) ermöglicht, Kunstwerke (10) zu erwerben und durch Kauf von Anteilen an dem Auktionshaus (2), der Kunstgalerie (3) oder direkt am System und Markt für phygitale Kunstwerke (10) Investitionen zu tätigen; wobei der öffentliche Bereich (230) dazu ausgelegt ist, Hinweise in Bezug auf die Entwicklung des Marktes für Kunstwerke (10) sowie Prognosen, die durch die künstliche Intelligenz (201) erstellt wurden, bereitzustellen.

3. System für physische und digitale Kunst (100) gemäß dem vorstehenden Anspruch 1 oder 2, **dadurch gekennzeichnet, dass** das Produzenten-Kit (110) und das Manager-Kit (120) es ermöglichen, das Token (102) mit dem Tag (111) des Kunstwerks (10) zu verknüpfen; wobei das Token (102) dazu ausgelegt ist, mittels Smart-Contract-Technologie in Form eines nicht-fungiblen Tokens (NFT) registriert zu werden; wobei das in Form eines NFT registrierte Token (102), das innerhalb des Webportals und/oder der Anwendung (200) nutzbar ist, mit halbautomatischen Funktionen ausgestattet ist, die durch den Eigentümer, bei dem es sich um den Künstler/der Künstlerin (1), das Auktionshaus (2) oder die Kunstgalerie (3) handeln kann, individuell angepasst werden können und die die Ausstellung der fotografischen Darstellung des Kunstwerks (10) kostenlos, durch Zahlen einer bestimmten Gebühr oder nur durch Kauf des Kunstwerks (10) bereitstellen können; wobei das Token (102) in Form eines NFT dazu ausgelegt ist, das Eigentumsrecht an dem Kunstwerk (10) durch ein digitales Zertifikat über das Eigentumsrecht und/oder die Echtheit zu gewährleisten, unabhängig von der Bewegung, der Ausstellung oder der Verwahrung der physischen Darstellung des Kunstwerks (10) selbst.

4. System für physische und digitale Kunst (100) gemäß einem der vorstehenden Ansprüche, **dadurch gekennzeichnet, dass** die Fälschungsschutz-Einrichtung (113) dazu ausgelegt ist, auf dem Tag (111) einen Fälschungsschutz-Tintenstrahl zu erzeugen, der im Einmal-Format bereitgestellt wird, um das Tag (111) einzigartig zu machen, indem auf ihm und auf der auf ihn aufgedruckten Signatur (11) eine zufällige und nicht reproduzierbare Verteilung von Tintentröpfchen erzeugt wird, und eine physisch-digitale Verknüpfung zwischen der Signatur (11), dem Tag (111) und folglich dem Token (102), das in der Datenbank (202) gespeichert ist und das die Originalität des Kunstwerks (10) bescheinigt, zu erzeugen.

5. System für physische und digitale Kunst (100) gemäß einem der vorstehenden Ansprüche, **dadurch gekennzeichnet, dass** das Hersteller-Kit (110) eine Videokamera (115) mit einer Kommunikationseinheit (116) aufweist, die dazu ausgelegt ist, eine Verbindung mit dem Autorenbereich (210) herzustellen, um Videos, Zeitrafferaufnahmen und/oder Fotos des gesamten Entstehungsprozesses, eines Teils des Prozesses oder lediglich des Signiervorgangs des Kunstwerks (10), die direkt in dem Token (102) der Blockchain des Kunstwerks enthalten sein können, einzurichten und aufzunehmen.

6. System für physische und digitale Kunst (100) gemäß einem der vorstehenden Ansprüche, **dadurch gekennzeichnet, dass** das Manager-Kit (120) eine Video-Scaneinrichtung (124) zum Digitalisieren der physischen Umgebung der Kunstgalerie (3) und/oder eines anderen Ausstellungsraums aufweist; wobei die Video-Scaneinrichtung (124) Infrarot-Lasertechnologie zum Kartieren der Umgebung und deren Digitalisieren in dem Ausstellungsraum (221) des Webportals und/oder der Anwendung (200) nutzt; die mit der Video-Scaneinrichtung (124) gescannte Umgebung dazu ausgelegt ist, in dem Promoter-Bereich (220) zusammen mit den fotografischen Darstellungen der Kunstwerke (10) und/oder mit deren Token (102) eingerichtet zu werden.

7. System für physische und digitale Kunst (100) gemäß einem der vorstehenden Ansprüche, **dadurch gekennzeichnet, dass** das Webportal und/oder die Anwendung (200) dezentrale Anwendungen (dApps) nutzt, die in der Lage sind, separate Dienste bereitzustellen für:
- die Geolokalisierung des Kunstwerks (10);
- das Scannen der Signatur (11) und des Kunstwerks 8109 über eine tragbare Einrichtung wie etwa ein Smartphone, ein Tablet oder dergleichen;
- das Vorhalten eines Veranstaltungskalenders, der Mitteilungen über Fristen aktualisiert1 und versendet;
- das Vorhalten einer Karte der Manager, Museen, Kunststudios, Kunstgalerien (3), die an dem System teilnehmenden, wodurch diese physisch besucht werden können.

8. System für physische und digitale Kunst (100) gemäß einem der vorstehenden Ansprüche, **dadurch gekennzeichnet, dass** der Ausstellungsraum (221) des Webportals und/oder die Anwendung (200) durch einen Nutzer/eine Nutzerin, sei es der Künstler/die Künstlerin (1) und/oder die Privatperson (4), unter Verwendung eines Virtual-Reality-Betrachters (140), der dazu ausgelegt ist, einen virtuellen Besuch der Kunstgalerie (3) zu ermöglichen, besucht werden kann; wobei der Virtual-Reality-Betrachter (140) dazu ausgelegt ist, die Verwendung von Augmented-Reality-Algorithmen zu ermöglichen, wenn er im physischen Raum der Kunstgalerie (3) getragen wird, so dass, sobald die Kunstwerke (1) angezeigt werden, die Daten der zugehörigen Token (102) und der Preis automatisch gezeigt werden und es möglich ist, ein Kunstwerk (10) durch Interagieren mit dem Virtual-Reality-Betrachter (140) sofort zu erwerben, zum Beispiel durch Berühren von Eingabetasten darauf, durch Ausführen bestimmter Bewegungen mit dem Kopf oder auf andere Weise; wobei der Virtual-Reality-Betrachter (140) und das Webportal und/oder die Anwendung (200) dazu ausgelegt sind, die Erstellung digitaler Museen zu ermöglichen, in denen ein Besucher eine Eintrittskarte bezahlen kann, um die Kunstwerke (3) zu betrachten.

9. Verfahren (300) zum Bewerten und Authentifizieren des Kunstwerks (10) des Systems für physische und digitale Kunst (100) gemäß einem der vorstehenden Ansprüche, das das Verwenden des Systems gemäß den folgenden Schritten aufweist:
- eine Abmessungsdefinition (301), wobei das Webportal und/oder die Anwendung (200) den Künstler/die Künstlerin (1), das Auktionshaus (2) oder die Kunstgalerie (3) auffordert, die physischen Abmessungen des Kunstwerks (10) einzutragen;
- eine Künstler-Identitätsdefinition (302), wobei das Webportal und/oder die Anwendung (200) dem Künstler/der Künstlerin (1), dem Auktionshaus (2) oder der Kunstgalerie (3) einen Fragebogen vorlegt, das Informationen zur Ermittlung des Bekanntheitsgrades, der Anzahl und Qualität von Veröffentlichungen, der Anzahl und Qualität von Auszeichnungen sowie der Art der Ausbildung des Künstlers/der Künstlerin (1), der Urheber des Kunstwerks (10) ist, abfragt; wobei die künstliche Intelligenz (201) in der Lage ist, die Qualität von Veröffentlichungen und Auszeichnungen auf der Grundlage einer vorab festgelegten und ständig aktualisierten Hierarchie von Ausstellungen, Zeitschriften, Kunstgalerien und Wettbewerben zu bestimmen;
- eine Festlegung der relativen Dimensionen des Künstlers/der Künstlerin (303), wobei die künstliche Intelligenz (201) mittels algorithmischer Verfahren wie etwa Web-Scraping-Techniken, das Durchsuchen der persönlichen und öffentlichen Seiten des Künstlers/der Künstlerin (1), dem Urheber des Kunstwerks (10), das Analysieren der Quantität und Qualität von Impressionen, Interaktionen und Weiterverbreitungen analysiert; wobei der Schritt des Festlegens der relativen Dimensionen des Künstlers/der Künstlerin (303) in der Lage ist, zu einem positiven (Y) oder negativen (N) Ergebnis zu führen; wenn es der künstlichen Intelligenz (201) gelingt, zumindest eine Social-Media-Seite, ein Blog oder eine mit dem Künstler/der Künstlerin (1) verknüpfte URL zu identifizieren, ist das Ergebnis positiv (Y) und das Verfahren (300) fährt mit einem Schritt zur Festlegung der Reputation des Künstlers/der Künstlerin (304) fort; wenn das Ergebnis der Suche für die künstliche Intelligenz (201) mittels Web-Scraping null ist, ist das Ergebnis negativ (N), und das Webportal und/oder die Anwendung (200) fordert in einem Anfrageschritt (340) die manuelle Eingabe von Links zu Social-Media-Seiten, Blogs, Seiten und anderen Inhalten des Künstlers/der Künstlerin (1) an;
- eine Festlegung der Reputation des Künstlers/der Künstlerin (304), wobei die künstliche Intelligenz (201) mittels Web-Scraping-Techniken nach der Quantität und Qualität von Zitaten, Fälschungen und Rechtsverletzungen im Zusammenhang mit dem Künstler/der Künstlerin (1) sucht;
- eine Bestimmung (305) eines Vorsichtswertes, wobei ein vorsichtiger wirtschaftlicher Wert für das Kunstwerk (10) abhängig von der physischen Größe des Kunstwerks (10) und dem Kunstwerk-Koeffizienten (103) geschätzt wird; der Kunstwerk-Koeffizient (103) wird durch den Bewertungsalgorithmus (211) auf der Grundlage der Eigenschaften Identität, Bekanntheit, Viralität, Leistung und Reputation des Künstlers/der Künstlerin (1) bestimmt, die in den jeweiligen Schritten der Künstler-Identitätsdefinition (302), der Festlegung der relativen Größe des Künstlers/der Künstlerin (303) und der Festlegung der Reputation des Künstlers/der Künstlerin (304) bestimmt wurden; der Schritt zum Bestimmen des Vorsichtswerts (305) ist dazu ausgelegt, den Vorsichtswert und den Kunstwerk-Koeffizienten (103) im öffentlichen Bereich (230), im Ausstellungsraum (221) und in dem Künstlerforum (212) anzuzeigen;
- einen Druckschritt (350), bei dem die künstliche Intelligenz (201) die Signatur (11) auf das Tag (111) des Kunstwerks (10) druckt und die Daten hiervon in der Datenbank (202) speichert;
- einen Kontrollschritt (353), bei dem das Webportal und/oder die Anwendung (200) einen fotografischen Nachweis über das erfolgreiche Bedrucken des Tags (111) mit der Signatur (11) über die Kamera eines Smartphones, eines Tablets, die Webcam eines PCs oder über die Videokamera (115) anfordert; die künstliche Intelligenz (210) ist dazu ausgelegt, in dem Kontrollschritt (353) eine Analyse des eingereichten fotografischen Nachweises durchzuführen; der Kontrollschritt (353) ist dazu ausgelegt, zu einem positiven (Y) oder negativen (N) Ergebnis zu führen; wenn die künstliche Intelligenz (210) die Signatur (11) durch Nutzen von Bilderkennungsalgorithmen erkennt, ist das Ergebnis positiv (Y) und das Verfahren (300) wird mit einem Schritt zum Festlegen des potenziellen Werts (306) fortgesetzt; wenn die künstliche Intelligenz (201) einen Unterschied zwischen der in dem fotografischen Nachweis vorhandenen Signatur (11) und derjenigen, die in den vorhergehenden Schritten gedruckt und/oder in der Datenbank (202) gespeichert wurde, ist das Ergebnis negativ (N), die künstliche Intelligenz (201) sendet eine Benachrichtigung an das Webportal und/oder die Anwendung (200), und das Verfahren (300) beginnt erneut ab dem Druckschritt (350);
- eine Festlegung des potenziellen Werts (306), wobei das Webportal und/oder die Anwendung (200) die manuelle Festlegung eines potenziellen Werts des Kunstwerks (10) ermöglicht, der größer, gleich oder kleiner als der im Schritt zum Bestimmen des Vorsichtswerts (305) ermittelte Vorsichtswert sein kann;
- einen Analyseschritt (307), bei dem die künstliche Intelligenz (201) den Verkaufstrend des Kunstwerks (10) im Verhältnis zum Vorsichtswert und zum potenziellen Wert, die jeweils in den Schritten der Festlegung des Vorsichtswerts (305) und der Festlegung des potenziellen Werts (306) bewertet wurden, analysiert; wobei der Analyseschritt (307) dazu ausgelegt ist, verschiedene Ergebnisse zu liefern; wenn der Vorsichtswert mit dem potenziellen Wert übereinstimmt und das Werk verkauft wird (A-Y), wird das Verfahren (300) mit einem Abschlussschritt (371), in dem die künstliche Intelligenz (201) den Erfolg der Vorhersage aufzeichnet, fortgesetzt; wenn der Vorsichtswert mit dem potenziellen Wert übereinstimmt, das Werk jedoch unverkauft bleibt (A-N), wird das Verfahren (300) mit einem Warte- und Neuverarbeitungsschritt (372) fortgesetzt, in dem es eine voreingestellte und anpassbare Zeitspanne abwartet, um dann erneut mit dem Schritt zur Festlegung der Künstleridentität (302) zu beginnen; wenn sich der Vorsichtswert von dem potenziellen Wert unterscheidet und das Werk verkauft wird (B-Y), wird das Verfahren (300) mit einem Neukalibrierungs- und Abschlussschritt (373), in dem die künstliche Intelligenz (201) den Erfolg des potenziellen Verkaufswerts aufzeichnet, fortgesetzt; diese Erfassung wird in allen zukünftigen Phasen der Festlegung der Künstleridentität (302) ein erhebliches Gewicht haben; wenn der Vorsichtswert von dem potenziellen Wert abweicht, das Kunstwerk jedoch unverkauft bleibt (B-N), fährt das Verfahren (300) mit einem Warte- und Warnschritt (374) fort, in dem es eine voreingestellte und anpassbare Zeitspanne abwartet, um dann eine angepasste Warnung zu senden, um den Künstler/die Künstlerin (1) zu erinnern, das betreffende Auktionshaus (2) oder die betreffende Kunstgalerie (3), das/die das Kunstwerk (10) verkauft, darauf hinzuweisen, dass der ausgewählte potenzielle Wert von dem bestimmten und als ineffektiv erwiesenen Vorsichtswert abweicht; das Verfahren (300) beginnt daher erneut ab dem Schritt zum Festlegen des potenziellen Werts (306).

## Revendications

1. Système pour l'art physique et numérique (100), adapté à l'utilisation par un artiste (1) avec une signature (11), une maison de vente aux enchères (2), une galerie d'art (3) et/ou un particulier (4) pour exposer, vendre, acheter et certifier via la technologie de chaîne de blocs au moins une œuvre d'art (10) de type phygital, et comprenant :
- au moins un portail web et/ou une application (200) adapté(e) pour permettre l'affichage, la vente, l'achat et la certification via la technologie de chaîne de blocs de ladite œuvre d'art (10) et son évaluation économique ; ledit portail web et/ou ladite application (200) étant apte(s) à certifier une signature (11) apposée par ledit artiste (1) sur ladite œuvre d'art (10), associant ladite signature (11) sous forme nominale ou de pseudonyme, à la personne physique et aux droits légaux dudit artiste (1) lui permettant de signer des contrats, signer des œuvres d'art (10) et réaliser des transactions en utilisant alternativement son nom ou son pseudonyme ; ledit portail web et/ou ladite application (200) étant apte(s) à lier l'évaluation économique de ladite œuvre d'art (10) uniquement à la signature (11) apposée par ledit artiste (1) ;
- un kit producteur (110) adapté pour permettre audit artiste (1) de générer un jeton numérique (102) pour sa propre œuvre d'art (10) associée à une étiquette RFID, NFC, Beacon ou Bluetooth (111) ; ledit kit producteur (110) comprenant un dispositif anti-contrefaçon (113) et au moins un portefeuille froid (112) adapté pour permettre l'archivage d'une certaine quantité d'une cryptomonnaie (101) ainsi que de ladite œuvre d'art (10) et de NFT ; ledit kit producteur (110) comprenant une caméra vidéo (115) avec une unité de communication (116) adaptée pour se connecter audit portail web et/ou à ladite application (200) pour la configuration et la réalisation de vidéos, de chronophotographie et/ou de photos de l'ensemble du processus de création, d'une partie du processus, ou uniquement de l'opération de signature de ladite œuvre d'art (10) qui peut être incluse directement dans le jeton (102) de la chaîne de blocs de l'œuvre d'art ; ledit dispositif anti-contrefaçon (113) étant adapté pour générer un jet d'encre pulvérisée sur l'étiquette (111), dont les gouttelettes séchées sont scannées avec ladite caméra vidéo (115) et ne peuvent pas être reproduites par des contrefacteurs ;
- un kit gestionnaire (120) adapté pour permettre à ladite maison de vente aux enchères (2) et/ou à ladite galerie d'art (3) de cartographier leur/son espace d'exposition et de pouvoir générer ledit jeton (102) pour ladite œuvre d'art (10) et de pouvoir la vendre ; ledit kit gestionnaire (120) étant adapté à l'exploitation d'un lecteur d'étiquettes (121) en utilisant RFID, NFC, Beacon ou Bluetooth, pour lire ladite étiquette (111), un portefeuille froid gestionnaire (122) adapté pour permettre le stockage d'une quantité de ladite cryptomonnaie (101) pour les transactions d'achat et de vente de ladite maison de vente aux enchères (2) et/ou ladite galerie d'art (3) et de NFT, un dispositif d'impression (123) adapté pour imprimer sur les étiquettes (111) un code QR associé à ladite signature (11), ladite signature (11) elle-même et/ou d'autres informations telles que des logos et similaires ; ledit kit gestionnaire (120) comprenant ledit dispositif anti-contrefaçon (113) et ladite caméra vidéo (115) ;
- une vitrine intelligente (130) adaptée pour permettre audit particulier (4) ayant acheté ladite œuvre d'art (10), de placer ladite œuvre d'art avec son étiquette relative (111) dans un espace privé ; ladite vitrine intelligente (130) étant adaptée pour être réalisée en verre antireflet ; ladite vitrine intelligente (130) étant adaptée pour permettre la lecture de ladite étiquette (111) afin d'afficher le jeton non fongible (NFT) associé avec lequel ledit jeton (102) a été enregistré et la chaîne de blocs qui y est associée ;
ledit portail web et/ou ladite application (200) comprenant :
- une intelligence artificielle (201) adaptée à l'utilisation d'algorithmes d'apprentissage automatique et d'apprentissage profond pour vérifier les informations dudit artiste (1) saisies dans le portail par l'artiste (1) lui-même, par ladite maison de vente aux enchères (2), par ladite galerie d'art (3), par des historiens de l'art, des utilisateurs conservateurs et/ou des utilisateurs collectionneurs, analysant les données enregistrées dans la chaîne de blocs concernant la quantité d'œuvres d'art (10) produites, le temps nécessaire à leur production, la valeur desdites œuvres d'art (10) et la véracité d'autres informations saisies en adoptant des procédures algorithmiques telles que le moissonnage de données pour vérifier les URL, en croisant les données saisies avec celles de la base de données ISBN ainsi qu'avec celles d'articles de journaux, de blogs, de sites externes et autres ;
- une section auteur (210) adaptée pour permettre l'enregistrement dudit artiste (1) sur le portail, afin de permettre la détermination du coefficient artistique (103), associé audit artiste (1), via un algorithme d'évaluation (211), et pour permettre l'affichage et la vente de ladite œuvre d'art (10) dans un tableau d'affichage de l'artiste (212) par la connexion avec ledit kit producteur (110) ;
- une base de données (202) adaptée pour stocker des données d'utilisateur de portail, des données de chaîne de blocs, ainsi que les associations établies entre ledit artiste (1), ladite signature (11), ledit coefficient artistique (103) et ladite œuvre d'art (10), et pour surveiller les données des transactions d'achat et de vente réalisées avec ladite cryptomonnaie (101) ;
- une section promoteur (220) adaptée pour permettre à ladite maison de vente aux enchères (2) et/ou à ladite galerie d'art (3) d'enregistrer leurs/ses propres œuvres d'art (10) via lesdites étiquettes (111) et les jetons relatifs (102) dans des données de chaîne de blocs, afin de permettre l'affichage desdites œuvres d'art (10) dans un espace d'exposition (221), et de permettre la vente et l'achat desdites œuvres d'art (10) ;
- une section publique (230) dans laquelle ledit utilisateur privé (4) peut visualiser ledit espace d'exposition (221), ledit tableau d'affichage de l'artiste (212), dans laquelle il/elle peut recevoir des suggestions personnalisées d'œuvres d'art (10) à voir par ladite intelligence artificielle (201) qui analyse et étudie les préférences dudit utilisateur privé (4), dans laquelle il/elle peut consulter les tendances de vente associées à un artiste (1) spécifique, ou à une maison de vente aux enchères (2) et/ou une galerie d'art (3) spécifiques.

2. Système pour l'art physique et numérique (100) selon la revendication précédente 1, **caractérisé en ce que** ladite section publique (230) permet audit particulier (4) d'acheter des œuvres d'art (10) et de réaliser des investissements en achetant des parts faisant partie de ladite maison de vente aux enchères (2), de ladite galerie d'art (3), ou directement du système et du marché des œuvres d'art phygitales (10) ; ladite section publique (230) étant adaptée pour fournir des indications relatives à la tendance du marché des œuvres d'art (10) et des prévisions réalisées par ladite intelligence artificielle (201).

3. Système pour l'art physique et numérique (100) selon la revendication précédente 1 ou 2, **caractérisé en ce que** ledit kit producteur (110) et ledit kit gestionnaire (120) permettent de relier ledit jeton (102) à ladite étiquette (111) de ladite œuvre d'art (10) ; ledit jeton (102) étant adapté pour être enregistré avec une technologie de contrat intelligent sous la forme d'un jeton non fongible (NFT) ; ledit jeton (102) enregistré sous forme de NFT, utilisable au sein dudit portail web et/ou de ladite application (200), est doté de fonctions semi-automatiques pouvant être personnalisées par le propriétaire qui peut être ledit artiste (1), ladite maison de ventes aux enchères (2) ou ladite galerie d'art (3), et qui peuvent fournir l'affichage de la représentation photographique de ladite œuvre d'art (10) gratuitement, moyennant le paiement d'un certain tarif, ou uniquement par l'achat de l'œuvre d'art (10) elle-même ; ledit jeton (102) sous forme d'un NFT étant adapté pour garantir la propriété de ladite œuvre d'art (10) avec un certificat numérique de propriété et/ou d'authenticité indépendamment du déplacement, de l'affichage ou de la garde de la représentation physique de ladite œuvre d'art (10) elle-même.

4. Système pour l'art physique et numérique (100) selon l'une des revendications précédentes, **caractérisé en ce que** ledit dispositif anti-contrefaçon (113) est adapté pour produire un jet d'encre anti-contrefaçon, fourni en format jetable, sur ladite étiquette (111) afin de rendre ladite étiquette (111) unique en générant sur celle-ci et sur la signature (11) imprimée dessus une distribution aléatoire et irréproducible de gouttelettes d'encre et pour générer un lien physique-numérique entre ladite signature (11), ladite étiquette (111) et par conséquent ledit jeton (102) qui est enregistré dans ladite base de données (202) et qui certifie l'originalité de ladite œuvre d'art (10).

5. Système pour l'art physique et numérique (100) selon l'une des revendications précédentes, **caractérisé en ce que** ledit kit producteur (110) comprend une caméra vidéo (115) avec une unité de communication (116) adaptée pour se connecter à ladite section auteur (210) pour la mise en place et la réalisation de vidéos, de chronophotographie et/ou de photos de l'ensemble du processus de création, d'une partie du processus, ou simplement de l'opération de signature de ladite œuvre d'art (10) qui peut être incluse directement dans le jeton (102) de la chaîne de blocs de l'œuvre d'art.

6. Système pour l'art physique et numérique (100) selon l'une des revendications précédentes, **caractérisé en ce que** ledit kit gestionnaire (120) comprend un dispositif de balayage vidéo (124) pour numériser l'environnement physique de ladite galerie d'art (3) et/ou d'un autre espace d'exposition ; ledit dispositif de balayage vidéo (124) adoptant une technologie laser infrarouge pour cartographier l'environnement et le numériser dans ledit espace d'affichage (221) dudit portail web et/ou de ladite application (200) ; l'environnement balayé avec ledit dispositif de balayage vidéo (124) étant adapté pour être mis en place dans ladite section promoteur (220) avec les représentations photographiques desdites œuvres d'art (10) et/ou avec leurs jetons (102).

7. Système pour l'art physique et numérique (100) selon l'une des revendications précédentes, **caractérisé en ce que** ledit portail Web et/ou ladite application (200) tirent/tire parti d'applications décentralisées (dApps) aptes à fournir des services distincts pour :
- la géolocalisation de ladite œuvre d'art (10) ;
- la numérisation de ladite signature (11) et de ladite œuvre d'art 8109 via un appareil portable tel qu'un smartphone, une tablette ou similaire ;
- la disposition d'un calendrier d'événements qui se met à jour et envoie des notifications de dates limites ;
- la disposition d'une carte des gestionnaires, musées, ateliers d'art, galeries d'art (3) qui participent au système les rendant physiquement visitables.

8. Système pour l'art physique et numérique (100) selon l'une des revendications précédentes, **caractérisé en ce que** ledit espace d'exposition (221) dudit portail web et/ou de ladite application (200) peut être visité par un utilisateur, que ce soit ledit artiste (1) et/ou ledit particulier (4) utilisant un casque de réalité virtuelle (140) adapté pour permettre une visite virtuelle de ladite galerie d'art (3) ; ledit casque de réalité virtuelle (140) étant adapté pour permettre l'utilisation d'algorithmes de réalité augmentée, lorsqu'il est porté dans l'espace physique de ladite galerie d'art (3), de sorte que, une fois lesdites œuvres d'art (1) affichées, les données des jetons relatifs (102) et le prix soient automatiquement présentés, et permettant d'acheter immédiatement une œuvre d'art (1) en interagissant avec le casque de réalité virtuelle (140) par exemple en touchant des boutons d'entrée dessus, en effectuant des mouvements particuliers avec la tête ou autre ; ledit casque de réalité virtuelle (140)
et ledit portail web et/ou ladite application (200) étant adapté(s) pour permettre la création de musées numériques dans lesquels un visiteur peut payer un billet d'entrée pour voir lesdites œuvres d'art (3).

9. Procédé (300) pour l'évaluation et l'authentification de ladite œuvre d'art (10) dudit système pour l'art physique et numérique (100) selon l'une des revendications précédentes, comprenant l'utilisation du système selon les étapes suivantes :
- la définition d'une taille (301) dans laquelle ledit portail web et/ou ladite application (200) demandent/demande audit artiste (1), à ladite maison de vente aux enchères (2) ou à ladite galerie d'art (3) de saisir les dimensions physiques de ladite œuvre d'art (10) ;
- la définition d'une identité de l'artiste (302) dans laquelle ledit portail web et/ou ladite application (200) soumettent/soumet ledit artiste (1), ladite maison de vente aux enchères (2) ou ladite galerie d'art (3) à un questionnaire demandant des informations pour mesurer la notoriété, la quantité et la qualité des publications, la quantité et la qualité des prix ainsi que le type de formation dudit artiste (1) auteur de ladite œuvre d'art (10) ; ladite intelligence artificielle (201) étant apte à déterminer la qualité des publications et des récompenses sur la base d'une hiérarchie d'expositions, de magazines, de galeries d'art et de concours stipulée à l'avance et constamment mise à jour ;
- la définition des dimensions relatives de l'artiste (303) dans laquelle ladite intelligence artificielle (201), par des procédures algorithmiques telles que des techniques de moissonnage de données, recherche les pages personnelles et publiques de l'artiste (1) auteur de ladite œuvre d'art (10) en analysant la quantité et la qualité des impressions, interactions et partages ; ladite étape de définition des dimensions relatives de l'artiste (303) pouvant avoir un résultat positif (Y) ou négatif (N) ; lorsque ladite intelligence artificielle (201) parvient à identifier au moins une page de réseau social, un blog ou une URL liée audit artiste (1), le résultat est positif (Y) et le procédé (300) procède à une étape de définition de réputation d'artiste (304) ; lorsque le résultat de la recherche de ladite intelligence artificielle (201) via le moissonnage de données est nul, le résultat est négatif (N) et ledit portail web et/ou ladite application (200) demandent/demande, lors d'une étape de requête (340), l'insertion manuelle de liens vers des pages de réseaux sociaux, blogs, sites et autres dudit artiste (1) ;
- la définition d'une réputation de l'artiste (304) dans laquelle ladite intelligence artificielle (201), par des techniques de moissonnage de données, recherche la quantité et la qualité des citations, contrefaçons et infractions liées audit artiste (1) ;
- la détermination d'une valeur prudentielle (305) dans laquelle une valeur économique prudentielle est estimée pour ladite œuvre d'art (10) en fonction de la taille physique de ladite œuvre d'art (10) et du coefficient de ladite œuvre d'art (103) ; le coefficient de ladite œuvre d'art (103) est déterminé par ledit algorithme d'évaluation (211) sur la base des caractéristiques d'identité, de notoriété, de viralité, de performance et de réputation dudit artiste (1), déterminées lors des étapes respectives de définition de l'identité de l'artiste (302), de définition de la taille relative de l'artiste (303) et de définition de la réputation de l'artiste (304) ; ladite étape de détermination de la valeur prudentielle (305) est adaptée pour afficher la valeur prudentielle et le coefficient de ladite œuvre d'art (103) dans ladite section publique (230), dans ledit espace d'exposition (221) et sur ledit tableau d'affichage de l'artiste (212) ;
- une étape d'impression (350), dans laquelle ladite intelligence artificielle (201) imprime ladite signature (11) sur ladite étiquette (111) de ladite œuvre d'art (10) et enregistre les données correspondantes dans ladite base de données (202) ;
- une étape de contrôle (353) dans laquelle ledit portail web et/ou ladite application (200) demandent/demande une preuve photographique de l'impression réussie de ladite étiquette (111) avec ladite signature (11) via la caméra d'un smartphone, d'une tablette, la webcam d'un PC ou via ladite caméra vidéo (115) ; ladite intelligence artificielle (210) est adaptée, dans ladite étape de contrôle (353), pour réaliser une analyse de la preuve photographique insérée ; ladite étape de contrôle (353) est adaptée pour avoir un résultat positif (Y) ou négatif (N) ; lorsque ladite intelligence artificielle (210) reconnaît ladite signature (11) en exploitant des algorithmes de reconnaissance photographique, le résultat est positif (Y) et le procédé (300) se poursuit avec une étape de définition de la valeur potentielle (306) ; lorsque ladite intelligence artificielle (201) identifie une différence entre ladite signature (11) présente dans la preuve photographique et celle imprimée lors les étapes précédentes et/ou enregistrée dans ladite base de données (202), le résultat est négatif (N), ladite intelligence artificielle (201) envoie une notification sur ledit portail web et/ou à ladite application (200) et le procédé (300) redémarre à partir de ladite étape d'impression (350) ;
- la définition de la valeur potentielle (306) dans laquelle ledit portail web et/ou ladite application (200) permettent/permet la définition manuelle d'une valeur potentielle de ladite œuvre d'art (10) qui peut être supérieure, égale ou inférieure à la valeur prudentielle évaluée lors de ladite étape de détermination de la valeur prudentielle (305) ;
- une étape d'analyse (307) dans laquelle ladite intelligence artificielle (201) analyse la tendance de la vente de ladite œuvre d'art (10) en relation avec la valeur prudentielle et la valeur potentielle respectivement évaluées dans lesdites étapes de détermination de la valeur prudentielle (305) et de définition de la valeur potentielle (306) ; ladite étape d'analyse (307) étant adaptée pour avoir divers résultats ; lorsque la valeur prudentielle coïncide avec la valeur potentielle et que l'œuvre est vendue (*A-Y*), le procédé (300) se poursuit avec une étape de finalisation (371) dans laquelle ladite intelligence artificielle (201) enregistre le succès de la prédiction ; lorsque la valeur prudentielle coïncide avec la valeur potentielle mais que l'œuvre reste invendue (*A-N*), le procédé (300) se poursuit avec une étape d'attente et de retraitement (372) dans laquelle elle attend une période prédéfinie et personnalisable, pour ensuite redémarrer à partir de ladite étape de définition de l'identité de l'artiste (302) ; lorsque la valeur prudentielle est différente de la valeur potentielle et que l'œuvre est vendue (*B-Y*), le procédé (300) se poursuit avec une étape de recalibrage et de finalisation (373) dans laquelle ladite intelligence artificielle (201) enregistre le succès de la valeur potentielle de vente, cet enregistrement aura un poids significatif dans toute étape future de définition de l'identité de l'artiste (302) ; lorsque la valeur prudentielle est différente de la valeur potentielle mais que l'œuvre reste invendue (*B-N*), le procédé (300) se poursuit avec une étape d'attente et d'avertissement (374) dans laquelle elle attend une période prédéfinie et personnalisable, pour ensuite envoyer une alerte adaptée pour rappeler audit artiste (1), à ladite maison de vente aux enchères (2) ou à ladite galerie d'art (3) qui vend ladite œuvre d'art (10), que la valeur potentielle sélectionnée diffère de la valeur prudentielle déterminée et s'est avérée inefficace ; le procédé (300) redémarre donc à partir de ladite étape de définition de la valeur potentielle (306).
